# EUROPEAN PATENT SPECIFICATION

(11) **EP 4 134 845 B1**
(45) Date of publication and mention of the grant of the patent: **05.03.2025**
(21) Application number: 21784583.3
(22) Date of filing: 08.04.2021
(51) Int. Cl.: G06F 21/78, G06F 21/31, G06F 12/14

(54) **MEMORY ACCESS METHOD, SYSTEM-ON-CHIP, AND ELECTRONIC DEVICE**
SPEICHERZUGRIFFSVERFAHREN, SYSTEM AUF EINEM CHIP UND ELEKTRONISCHE VORRICHTUNG
PROCÉDÉ D'ACCÉS MÉMOIRE, SYSTÈME SUR PUCE ET DISPOSITIF ÉLECTRONIQUE

(30) Priority: 08.04.2020 CN 202010269161
(43) Date of publication of application: 15.02.2023
(73) Proprietor: Sanechips Technology Co., Ltd., Shenzhen, Guangdong 518055 (CN)
(72) Inventor: WANG, Yong, Shenzhen, Guangdong 518057 (CN); XU, Huafeng, Shenzhen, Guangdong 518057 (CN); GUO, Bin, Shenzhen, Guangdong 518057 (CN)
(74) Representative: Canzler & Bergmeier Patentanwälte Partnerschaft mbB
(86) International application number: PCT/CN2021/000066
(87) International publication number: WO 2021/203767

(56) References cited:
- CN-A- 108 369 629
- CN-A- 108 460 287
- CN-A- 110 929 304
- US-A1- 2003 200 454
- US-A1- 2015 095 662
- US-A1- 2018 032 448

## Description

### CROSS-REFERENCE TO RELATED APPLICATIONS

The present application claims priority to the Chinese Patent Application No. 202010269161.6 filed on April 8, 2020.

### TECHNICAL FIELD

The present application relates to the field of information technologies, and in particular, to a method for accessing a memory, a system on chip, and an electronic device.

### BACKGROUND

Along with continuous developments of technologies, a system on chip (SoC) is widely applied. For example, during processes for developing various electronic products such as set top boxes, mobile phones, multimedia players, and the like, SoCs are generally used for reducing cost of developing the electronic products, shortening a development period and improving competitiveness of the electronic products. Along with enhancements of information security awareness of people, the industry puts forward higher expectations on a security protection during the SoC processing data, however, a level of the security protection for data in a conventional mode is relatively low, and thus a risk of data leakage is relatively high.

U.S. Patent Application US20150095662A1 discloses a method operational within a memory controller for securing content stored in memory, in which a memory controller allocate logical memory regions within a memory device to different domains, a different domain-specific key is obtained for each of the different domains.

U.S. Patent Application US20030200454A1 discloses techniques for initializing, maintaining, updating and recovering secure operation within an integrated system, which employ a data access control function within the integrated system, include authenticating by a current level of software a next level of software within an integrated system. The authenticating occurs before control is passed to the next level of software.

### SUMMARY

In a first aspect, the present application provides a method for accessing a memory, applied to a system on chip, including:
writing, by an interface of the system on chip, service data into a first region of the memory;
reading, by each apparatus following the interface, data, to be processed, written by a previous apparatus in a region of the memory corresponding to the previous apparatus, processing the data to be processed and writing processed data into a next region of the memory, till reading, by a last apparatus following the interface, data, to be processed, written by a previous apparatus in a region of the memory corresponding to the previous apparatus, and processing the data to be processed to obtain feedback data, so that the feedback data is written into the first region; and transmitting, by the interface, the feedback data;
where a processor serving as the apparatus following the interface only have an access permission for the first region,
the reading, by each apparatus following the interface, data, to be processed, written by a previous apparatus in a region of the memory corresponding to the previous apparatus, processing the data to be processed and writing processed data into a next region of the memory, till reading, by a last apparatus following the interface, data, to be processed, written by a previous apparatus in a region of the memory corresponding to the previous apparatus, processing the data to be processed to obtain feedback data, so that the feedback data is written into the first region includes: writing, by a first encryption and decryption apparatus, first data obtained by decrypting the service data in the first region into a second region of the memory; writing, by a data processing apparatus, second data obtained by processing the first data into a third region of the memory; and
writing, by the first encryption and decryption apparatus, the feedback data obtained by encrypting the second data into the first region of the memory,
the first region supports to be accessed by all host apparatuses of the system on chip, the second region only supports a write operation performed by the first encryption and decryption apparatus and a read operation performed by the data processing apparatus, the third region supports only a write operation performed by the data processing apparatus and a read operation performed by the first encryption and decryption apparatus.

In a second aspect, the present application provides a system on chip, including: an interface, apparatuses following the interface and a memory connected through a bus, the interface is configured to write service data into a first region of the memory; each of the apparatuses following the interface is configured to read data, to be processed, written by a previous apparatus in a region of the memory corresponding to the previous apparatus, process the data to be processed and write processed data into a next region of the memory, till a last apparatus following the interface reads data, to be processed, written by a previous apparatus in a region of the memory corresponding to the previous apparatus, and processes the data to be processed to obtain feedback data, so that the feedback data is written into the first region; and the interface is further configured to transmit the feedback data;
where a processor serving as the apparatus following the interface only have an access permission for the first region,
the apparatuses following the interface include a first encryption and decryption apparatus and a data processing apparatus;
the first encryption and decryption apparatus is configured to write first data obtained by decrypting the service data in the first region into a second region of the memory;
the data processing apparatus is configured to write second data obtained by processing the first data into a third region of the memory; and the first encryption and decryption apparatus is configured to write the feedback data obtained by encrypting the second data into the first region of the memory,
the first region supports to be accessed by all host apparatuses of the system on chip, the second region only supports a write operation performed by the first encryption and decryption apparatus and a read operation performed by the data processing apparatus, the third region supports only a write operation performed by the data processing apparatus and a read operation performed by the first encryption and decryption apparatus.

In a third aspect, the present application provides an electronic device, including a system on chip provided in the present application.

### BRIEF DESCRIPTION OF DRAWINGS

Fig. 1 is a schematic flowchart of a method for accessing a memory according to the present application;
Fig. 2 is a schematic diagram of a path for accessing a memory according to the present application;
Fig. 3 is a schematic flowchart of a method for accessing a memory according to the present application;
Fig. 4 is a structural schematic diagram of a system on chip according to the present application;
Fig. 5 is a structural schematic diagram of a system on chip according to the present application; and
Fig. 6 is a structural schematic diagram of a system on chip according to the present application.

### DETAIL DESCRIPTION OF EMBODIMENTS

In order to make purposes, technical solutions, and advantages of the present application clearer, embodiments of the present application are described below with reference to the accompanying drawings. It should be noted that the embodiments of the present application and characteristics in the embodiments may be combined with each other if no conflict is incurred.

A system on chip in the present application relates to two apparatuses: a host apparatus and a slave apparatus. The host apparatus refers to an apparatus in the system on chip that can issue write command and read command actively, for example, may be a processor, an apparatus with a direct memory access (DMA) module built therein, and the like; the slave apparatus refers to an apparatus in the system on chip that cannot issue write command and read command actively, but can only receive the write command and the read command passively, for example, may be a memory and the like.

It should be noted that an execution subject for executing the method described below may be an apparatus for accessing a memory, and the apparatus may be implemented as part or all of the system on chip described above by software, hardware, or a combination of software and hardware. The present application is to be described below by taking that the execution subject is the system on chip as an example.

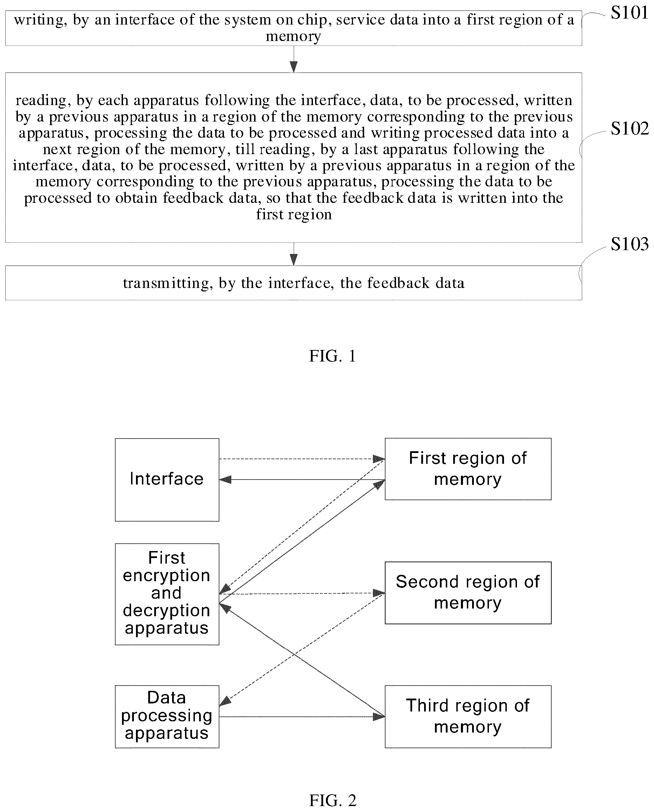

Fig. 1 is a schematic flowchart of a method for accessing a memory according to the present application, which relates to a specific process of accessing a memory by each host apparatus in the system on chip, and as shown in Fig. 1, the method includes operations S101 to S103.

At operation S101, writing, by an interface of the system on chip, service data into a first region of the memory.

Specifically, the interface is configured for connecting an external device, the external device may be an input/output device, for example, the input/output device may be a data acquisition sensor, a touch panel, a display, or the like. In addition, the interface may be an I2C interface, a mobile industry processor interface (MIPI), an Ethernet interface, or another bus interface capable of being connected with the external device. For service processing, the interface of the system on chip receives service data transmitted by the external device, and writes the service data into the first region of the memory by the DMA module built in the interface of the system on chip. The service data may be encrypted data to be processed, such as an encrypted video stream. The first region may be accessed by any host apparatus of the system on chip, that is, the first region is a common region to be freely accessed. Other regions of the memory are access-restricted regions, i.e., each of other regions is only to be accessed by a designated host apparatus, and cannot be accessed by host apparatuses that are not designated. Accessing the memory includes performing a read operation or a write operation on the memory.

In practical applications, in order to improve a level of security protection of the system on chip for data, the memory of the system on chip may be divided into a plurality of regions in advance, and a size of each region, a start address and an end address of each region may be configured according to actual storage expectations. In order to further improve security of the system on chip, i.e., to improve the level of security protection of the system on chip for data, a processor may divide the memory into a plurality of regions in a trusted execution environment.

At operation S102, reading, by each apparatus following the interface, data, to be processed, written by a previous apparatus in a region of the memory corresponding to the previous apparatus, processing the data to be processed and writing processed data into a next region of the memory, till reading, by a last apparatus following the interface, data, to be processed, written by a previous apparatus in a region of the memory corresponding to the previous apparatus, and processing the data to be processed to obtain feedback data, so that the feedback data is written into the first region.

Specifically, the apparatus following the interface mainly refers to a host apparatus of the system on chip, which may participate in processing service data, that is, all host apparatuses participating in processing the service data are apparatuses following the interface. For example, an encryption operation, a decryption operation, an encoding operation, a decoding operation, and the like, may be involved in processing the service data, and thus the apparatus following the interface may include an encryption and decryption apparatus, an encoding and decoding apparatus, a processor, etc. In response to that any other processing process is involved in processing the service data, the apparatus following the interface may further include an apparatus having a function corresponding to such processing process, which is not limited in the present application. In addition, the system on chip limits that the processor serving as the apparatus following the interface only accesses the first region, and cannot access other regions of the memory, so as to avoid other regions of the memory being accessed by software programs executed in the processor, and further avoid data leakage.

In order to avoid a leakage of plaintext data during processing the data, the plaintext data is not allowed to be written into the first region (i.e., the common region), but is to be written into other regions of the memory, which are access-restricted regions and only allow to be accessed by designated apparatuses. In such case, a process of accessing the memory by the apparatuses following the interface includes: according to a process of processing service data, a first apparatus following the interface reads data, to be processed, written by the interface in a region of the memory corresponding to the interface, processes the data to be processed and writes processed data into a next region of the memory, and then a next apparatus following the first apparatus reads data, to be processed, written by the first apparatus in a region of the memory corresponding to the first apparatus, processes the data to be processed and writes processed data into a next region of the memory, till a last apparatus following the interface reads data, to be processed, written by a previous apparatus in a region of the memory corresponding to the previous apparatus, processes the data to be processed to obtain feedback data so that the feedback data is written into the first region. The feedback data is data obtained by processing the service data through the system on chip.

In some implementations, the apparatus following the interface may include a first encryption and decryption apparatus configured to perform encryption and decryption operations, and a data processing apparatus configured to perform data processing. For such situation, a process of the operation S102 may include: writing, by the first encryption and decryption apparatus, first data obtained by decrypting the service data in the first region into a second region of the memory; writing, by the data processing apparatus, second data obtained by processing the first data into a third region of the memory; and writing, by the first encryption and decryption apparatus, feedback data obtained by encrypting the second data into the first region of the memory.

The first region, the second region, and the third region are access-restricted differently. The first region is an access-unrestricted region, i.e., the first region is a common region to be accessed freely; the second region and the third region are access-restricted regions, and in practical applications, access permissions for the second region and the third region may be configured according to the process of processing the service data. In some implementations, the second region may be configured to only support a write operation performed by the first encryption and decryption apparatus and a read operation performed by the data processing apparatus, the third region may be configured to support only a write operation performed by the data processing apparatus and a read operation performed by the first encryption and decryption apparatus. The first region, the second region, and the third region may not adjacent to each other, and are named only to distinguish different regions of the memory. Certainly, the access permissions for the first region, the second region and the third region may be configured according to other ways, in any case, in the processing for processing the service data, the interface, the first encryption and decryption apparatus, and the data processing apparatus access corresponding regions respectively according to the access permissions configured. Encryption and decryption algorithms which may be implemented in the first encryption and decryption apparatus include an advanced encryption standard (AES), a data encryption standard (DES), a RSA algorithm, an Elliptic-curve cryptography (ECC), a HASH algorithm, SM2/3/4 algorithms and randomized algorithm. The data processing apparatus is configured to perform data processing, such as encoding and decoding of audio/video streams, or message processing.

In order to further improve the security of the system on chip, in some implementations, before writing, by the interface of the system on chip, service data into the first region of the memory, configuring, by the processor, access permissions for the first region, the second region and the third region in a trusted execution environment.

During the system on chip being powered on and initialized, the system on chip may control the processor to execute in the trusted execution environment and configure the access permissions for the first region, the second region and the third region in the trusted execution environment, for example, the first region is configured to support to be accessed by any host apparatus of the system on chip, the second region is configured to only support a write operation performed by the first encryption and decryption apparatus and a read operation performed by the data processing apparatus, and the third region is configured to only support a write operation performed by the data processing apparatus and a read operation performed by the first encryption and decryption apparatus. In such way, parameters of access permissions for the memory are only configured once during initializing the system on chip, and the processor is not desired to frequently switch from an ordinary execution environment to the trusted execution environment to configure the parameters of the access permissions, so that a security of the system on chip is improved, and a reduction of system performances caused by repeatedly switching execution environment is avoided.

In addition, an One Time Programmable (OTP) memory, storing a key to be used for the first encryption and decryption apparatus performing operations of encryption or decryption, is built in the first encryption and decryption apparatus. The key is written into the OTP memory by the processor in the trusted execution environment and cannot be changed after being written into the OTP memory. Meanwhile, the key can only be read by the first encryption and decryption apparatus and can only be used in the first encryption and decryption apparatus, and software programs cannot access the key. For decrypting the service data, the first encryption and decryption apparatus reads the key from the internal OTP memory, and uses the key to decrypt the service data to obtain the first data. Correspondingly, for encrypting the second data, the first encryption and decryption apparatus reads the key from the internal OTP memory, and uses the key to encrypt the second data to obtain the feedback data.

At operation S103, transmitting, by the interface, the feedback data.

Specifically, the interface reads the feedback data from the first region, and transmits the feedback data to the external device of the system on chip to complete the process of processing the service data.

According to the whole process of processing service data of the system on chip, and as shown in Fig. 2, a data transmitting path implemented by the system on chip includes: a path 1 from the interface to the first region of the memory; a path 2 from the first region of the memory to the first encryption and decryption apparatus; a path 3 from the first encryption and decryption apparatus to the second region of the memory; a path 4 from the second region of the memory to the data processing apparatus; a path 5 from the data processing apparatus to the third region of the memory; a path 6 from the third region of the memory to the first encryption and decryption apparatus; a path 7 from the first encryption and decryption apparatus to the first region of the memory; and a path 8 from the first region of the memory to the interface.

For the path 1, the path 1 is a trusted path since the service data is encrypted data; for the path 2, since the key used for the first encryption and decryption apparatus decrypting the service data is directly read from the internal OTP memory of the first encryption and decryption apparatus, and external hardware and software programs cannot access the OTP memory, security of the process of decrypting is ensured; for the path 3, the second region is configured to only support the write operation performed by the first encryption and decryption apparatus and the read operation performed by the data processing apparatus, other host apparatuses and software programs cannot access the second region, so that the path 3 is ensured to be dedicated and trusted; for the path 4, the second region is configured to only support the read operation performed by the data processing apparatus, so that the path 4 is also ensured to be dedicated and trusted, and security of plaintext data in the process of processing is ensured; for the path 5, the third region is configured to only support the write operation performed by the data processing apparatus and the read operation performed by the first encryption and decryption apparatus, other host apparatuses and software programs cannot access the third region, so that the path 5 is ensured to be dedicated and trusted; for the path 6, since the key used for the first encryption and decryption apparatus encrypting the plaintext data is directly read from the internal OTP memory of the first encryption and decryption apparatus, and external hardware and software programs cannot access the OTP memory, so that security of the plaintext data during the process of encrypting is ensured; for the path 7, the feedback data obtained by encrypting is encrypted, and is stored in the first region; for the path 8, the interface reads the feedback data encrypted from the first region, and thus the path 8 is a trusted path.

In the whole trusted process of processing service data, the processor only configures parameters of the access permissions for the first region, the second region and the third region, and cannot participate in any trusted path, i.e., the processor cannot access the plaintext data in the memory, so that possibility of accessing the trusted path and obtaining the plaintext data by software is avoided, and a level of security protection of the system on chip for the data is further improved.

In the method for accessing the memory according to the present application, the interface of the system on chip writes the service data into the first region of the memory, each apparatus following the interface reads data, to be processed, written by a previous apparatus in a region of the memory corresponding to the previous apparatus, processes the data to be processed and writes processed data into a next region of the memory, till the last apparatus following the interface reads data, to be processed, written by a previous apparatus in a region of the memory corresponding to the previous apparatus, processes the data to be processed to obtain feedback data, so that the feedback data is written into the first region, and then the interface transmits the feedback data; the processor serving as the apparatus following the interface is only allowed to access the first region. In the whole data processing process of the system on chip, access permissions for regions of the memory are configured, so that the interface of the system on chip and each apparatus following the interface can only access designated regions of the memory, but cannot randomly access any region in the memory; meanwhile, the processor of the memory, only allowed to access the first region of the memory, cannot access other regions except the first region of the memory, i.e., the interface of the system on chip and the apparatus following the interface have restricted access permissions for the memory, and compared with accessing the memory without any restriction, a security of accessing the memory is improved, and thereby a risk of data leakage is reduced.

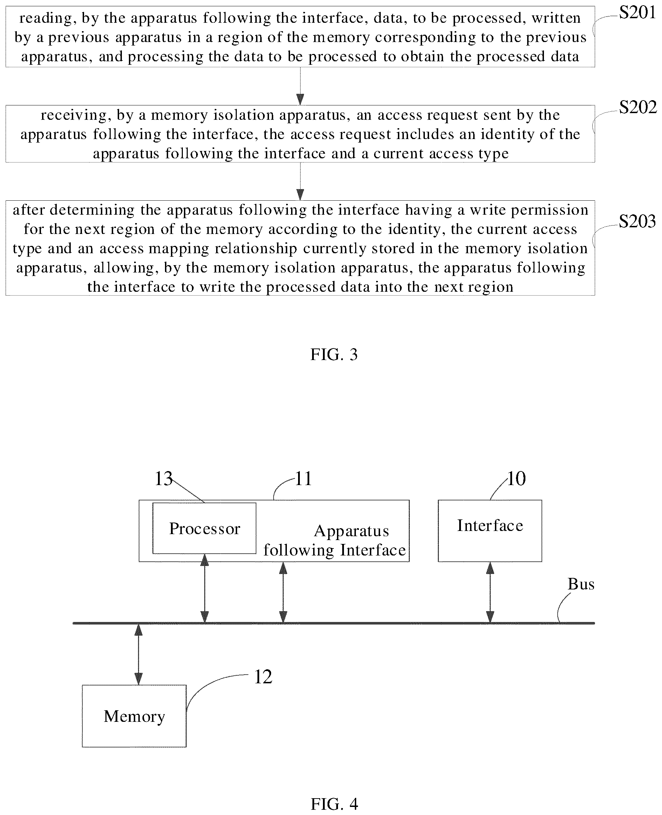

In practical applications, in order to further improve the security of the system on chip, before accessing the restricted regions (such as the second region and the third region) of the memory, whether the host apparatus currently accessing the restricted region has an access permission for the restricted region is determined by a memory isolation apparatus, and after determining that the host apparatus has the access permission for the restricted region, the host apparatus is allowed to access the restricted region. In some implementations, as shown in Fig. 3, the reading, by each apparatus following the interface, data, to be processed, written by a previous apparatus in a region of the memory corresponding to the previous apparatus, processing the data to be processed and writing processed data into a next region of the memory in the operation S102 may include following operations S201 to S203.

At operation S201, reading, by the apparatus following the interface, data, to be processed, written by a previous apparatus in a region of the memory corresponding to the previous apparatus, and processing the data to be processed to obtain processed data.

At operation S202, receiving, by a memory isolation apparatus, an access request sent by the apparatus following the interface, with the access request including an identity of the apparatus following the interface and a current access type.

At operation S203, after determining that the apparatus following the interface has a write permission for the next region of the memory according to the identity, the current access type and an access mapping relationship currently stored in the memory isolation apparatus, allowing, by the memory isolation apparatus, the apparatus following the interface to write the processed data into the next region, where the access mapping relationship includes a corresponding relationship between different regions of the memory and identities of apparatuses having access permissions for the regions, and a corresponding relationship between different regions of the memory and access types of apparatuses having access permissions for the regions.

The first encryption and decryption apparatus serving as the apparatus following the interface is illustrated as an example, since the first region is a common region to be accessed freely, the first encryption and decryption apparatus directly reads data, to be processed, from the first region of the memory, decrypts the data, to be processed, by a key stored in the OTP memory to obtain decrypted data, and for writing the decrypted data into the second region, the first encryption and decryption apparatus sends an access request to the memory isolation apparatus, in such situation, the access request carries an identity and a current access type of the first encryption and decryption apparatus. The current access type includes a write operation or a read operation, and since the first encryption and decryption apparatus is to write data into the second region, the current access type is the write operation. After receiving the access request, the memory isolation apparatus compares the identity and the current access type carried by the access request with the access mapping relationship stored in the memory isolation apparatus, in response to that the comparison is successful (i.e., an identity and an access type in the access mapping relationship are respectively matched with the identity and the current access type carried by the access request), the first encryption and decryption apparatus is determined to have a write permission for the second region, and thus is allowed to write the decrypted data into the second region; in response to that the comparison is failed (i.e., there is not any identity or access type, in the access mapping relationship, matched with the identity or the current access type carried by the access request), the first encryption and decryption apparatus is determined not to have a write permission for the second region, and thus is not allowed to write the decrypted data into the second region. The access mapping relationship may be preconfigured to be stored in the memory isolation apparatus, and may also be configured in the memory isolation apparatus by the processor in the trusted execution environment during initializing the system on chip.

Certainly, during the apparatus following the interface reading data, to be processed, written by a previous apparatus in a region of the memory corresponding to the previous apparatus, the memory isolation apparatus receives a read request sent by the apparatus following the interface, the read request carries an identity and a current access type (a read operation) of the apparatus following the interface, after determining that the apparatus following the interface has a read permission for the region of the memory corresponding to the previous apparatus according to the identity, the current access type, and the access mapping relationship currently stored in the memory isolation apparatus, the memory isolation apparatus allows the apparatus following the interface to read the data to be processed from the region of the memory corresponding to the previous apparatus. In response to that the apparatus following the interface is determined not to have a read permission for the region of the memory corresponding to the previous apparatus, the apparatus following the interface is not allowed to read the data to be processed from the region of the memory corresponding to the previous apparatus.

It is particularly noted that, in a case where the apparatus following the interface is a processor, the processor may also send an access request for requesting to access the memory, but since the processor does not have an access permission for other regions of the memory, therefore, after the processor sends an access request for requesting to access the second region and the third region of the memory, the memory isolation apparatus compares an identity and a current access type of the processor with the access mapping relationship currently stored in the memory isolation apparatus, and determines that the processor does not have the access permission for the second region and the third region, and in such case, the processor is to be refused to access the second region and the third region.

In the present application, in a case where the apparatus following the interface access an access-restricted region, whether the apparatus following the interface has an access permission for the access-restricted region may be determined by the memory isolation apparatus, after that the apparatus following the interface has the access permission for the access restricted region is determined, the apparatus following the interface is allowed to access the access-restricted region, so that a security of the system on chip is further improved, and a risk of data leakage is further reduced.

In practical applications, a service to be processed by the system on chip may include a service with a memory protection expectation, may further include a service without a memory protection expectation. The service with the memory protection expectation refers to a service having a restriction on accessing the memory during processing the service, the service without the memory protection expectation refers to a service having no restriction on accessing the memory during processing the service. For example, a processing of paid videos may be considered as the service with the memory protection expectation, a processing of free videos may be considered as the service without the memory protection expectation. In a case where a service to which the service data received by the interface belongs is the service without the memory protection expectation, in order to improve a processing performance of the system on chip, a second encryption and decryption apparatus may be used for performing encryption and decryption processing on the data. The first encryption and decryption apparatus described above is particularly configured to process the service with the memory protection expectation, i.e., the system on chip provides independent operation resources for different services. For such situation, the method for accessing the memory may further include: acquiring, by the second encryption and decryption apparatus, the key from the first encryption and decryption apparatus, and writing third data, obtained by decrypting the service data using the key, into the first region of the memory.

For the service without the memory protection expectation, in the whole data processing process, the interface of the system on chip, the second encryption and decryption apparatus and the data processing apparatus each access the first region of the memory, i.e., the second encryption and decryption apparatus reads data of the service without the memory protection expectation from the first region of the memory, acquires a key (the key is directly read from the OTP memory by the first encryption and decryption apparatus and transmitted to the second encryption and decryption apparatus; or the key is a new key derived from the key directly read from the OTP memory by the first encryption and decryption apparatus and transmitted to the second encryption and decryption apparatus) from the first encryption and decryption apparatus, and decrypts the service data by using the key to obtain the third data, and writes the third data into the first region of the memory. Correspondingly, for performing the encryption processing, the second encryption and decryption apparatus also acquires a key from the first encryption and decryption apparatus, encrypts the data to be processed by using the key, and writes encrypted data into the first region of the memory. Meanwhile, the key is only used in the second encryption and decryption apparatus, and software programs cannot access the key, so that a security of the system on chip is improved. In addition, a DMA module is built in the second encryption and decryption apparatus, so that the second encryption and decryption apparatus can directly read service data, to be processed, from the first region of the memory to process the service data, and the data is unnecessary to be transferred by the processor, it is avoided that the execution environment in which the processor runs is frequently switched or changed, and a risk of data leakage during switching or changing the execution environment is reduced.

In addition, the second encryption and decryption apparatus described above can only access the common region of the memory (i.e., the first region), and cannot access the access-restricted regions (i.e., the second region and the third region); the first encryption and decryption apparatus described above can access both the common region and the access-restricted regions, i.e., the level of security protection for the data during the first encryption and decryption apparatus the memory can be improved.

In the present application, in a case where a service to which the service data received by the interface belongs is the service without the memory protection expectation, the system on chip can perform encryption and decryption processing by the second encryption and decryption apparatus, and the first encryption and decryption apparatus is particularly configured to process the service with the memory protection expectation, i.e., the system on chip provides independent operation resources for different services, a system performance of the system on chip is improved.

Fig. 4 is a structural schematic diagram of a system on chip according to the present application. As shown in Fig. 4, the system on chip includes an interface 10, an apparatus 11 following the interface 10 and a memory 12 connected through a bus; the interface 10 is configured to write service data into a first region of the memory 12; each apparatus 11 following the interface 10 is configured to read data, to be processed, written by a previous apparatus in a region of the memory 12 corresponding to the previous apparatus, process the data to be processed and write processed data into a next region of the memory, till a last apparatus following the interface 10 reads data, to be processed, written by a previous apparatus in a region of the memory corresponding to the previous apparatus, processes the data to be processed to obtain feedback data, so that the feedback data is written into the first region; and the interface 10 is further configured to transmit the feedback data.

In some implementations, the apparatus 11 following the interface 10 includes a processor 13 only having an access permission for the first region of the memory, i.e., is only allowed to access the first region of the memory..

In the system on chip provided in the present application, the interface of the system on chip writes the service data into the first region of the memory, each apparatus following the interface reads data, to be processed, written by a previous apparatus in a region of the memory corresponding to the previous apparatus, processes the data to be processed and writes processed data into a next region of the memory, till the last apparatus following the interface reads data, to be processed, written by a previous apparatus in a region of the memory corresponding to the previous apparatus, processes the data to be processed to obtain feedback data, so that the feedback data is written into the first region, and then the interface transmits the feedback data; the processor serving as the apparatus following the interface only has an access permission for the first region, i.e., is only allowed to access the first region. In the whole data processing process of the system on chip, access permissions for regions of the memory are configured, so that the interface of the system on chip and each apparatus following the interface can only access designated regions of the memory, and cannot randomly access any region in the memory; meanwhile, the processor of the system on chip, having only the access permission for the first region of the memory, cannot access other regions except the first region of the memory, i.e., the interface of the system on chip and the apparatus following the interface have restricted access permissions for the memory, and compared with accessing the memory without any restriction, a security of accessing the memory is improved, and thereby a risk of data leakage is reduced.

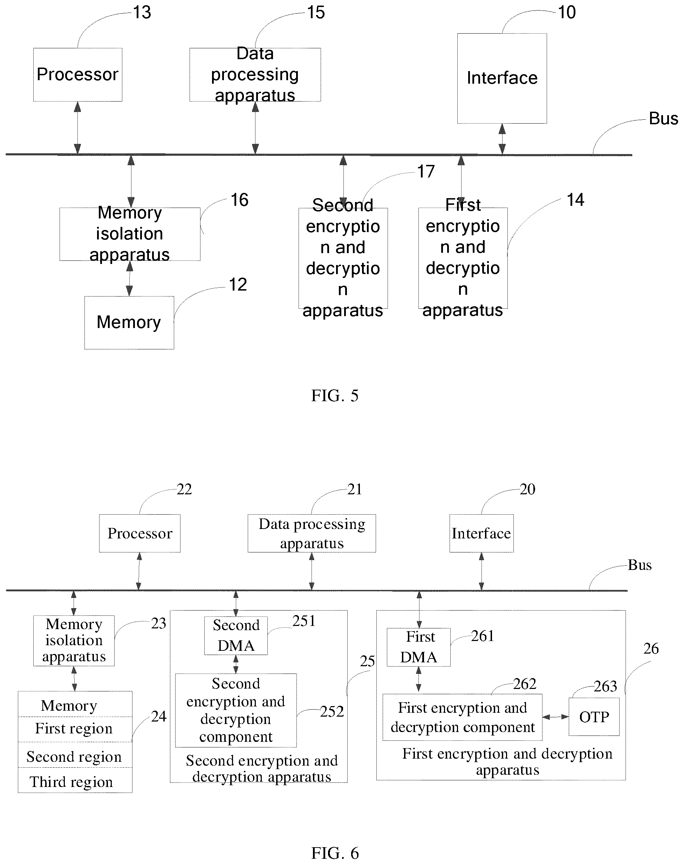

In some implementations, as shown in Fig. 5, the apparatus 11 following the interface 10 may include a first encryption and decryption apparatus 14 and a data processing apparatus 15; the first encryption and decryption apparatus 14 is configured to write first data obtained by decrypting the service data in the first region into a second region of the memory 12; the data processing apparatus 15 is configured to write second data obtained by processing the first data into a third region of the memory 12; the first encryption and decryption apparatus 14 is further configured to write the feedback data obtained by encrypting the second data into the first region of the memory 12.

In some implementations, the first region supports to be accessed by all host apparatuses of the system on chip, the second region only supports a write operation performed by the first encryption and decryption apparatus 14 and a read operation performed by the data processing apparatus 15, the third region supports only a write operation performed by the data processing apparatus 15 and a read operation performed by the first encryption and decryption apparatus 14.

In some implementations, the processor 13 configures access permissions for the first region, the second region and the third region in a trusted execution environment.

In some implementations, the first encryption and decryption apparatus stores a key used for decryption or encryption.

In some implementations, the system on chip further includes a memory isolation apparatus 16 connected through the bus; each apparatus following the interface is configured to read data, to be processed, written by a previous apparatus in a region of the memory corresponding to the previous apparatus, and process the data to be processed to obtain the processed data; the memory isolation apparatus 16 is configured to receive an access request sent by the apparatus following the interface, the access request includes an identity of the apparatus following the interface and a current access type; and after determining the apparatus following the interface having a write permission for the next region of the memory according to the identity, the current access type and a access mapping relationship currently stored in the memory isolation apparatus, the memory isolation apparatus 16 is configured to allow the apparatus following the interface to write the processed data into the next region, the access mapping relationship includes a corresponding relationship between different regions of the memory and identities of apparatuses having access permissions for the regions, and a corresponding relationship between different regions of the memory and access types of apparatuses having access permissions for the regions.

In some implementations, during the system on chip being initialized, the processor 13 is configured to configure the access mapping relationship into the memory isolation apparatus 16 in the trusted execution environment.

In some implementations, the system on chip further includes a second encryption and decryption apparatus 17 connected through a bus, and a service to which the service data belongs includes a service with a memory protection expectation or a service without the memory protection expectation; in a case where a service to which the service data belongs is the service without the memory protection expectation, the second encryption and decryption apparatus 17 is configured to acquire the key from the first encryption and decryption apparatus 14, and writes third data obtained by decrypting the service data using the key into the first region of the memory 12.

In some implementations, each of the first encryption and decryption apparatus 14, the data processing apparatus 15, and the second encryption and decryption apparatus 17 is provided with a DMA module therein.

In practical applications, the first encryption and decryption apparatus 14, the data processing apparatus 15, the memory isolation apparatus 16 and the second encryption and decryption apparatus 17 in the system on chip may be implemented by an application specific integrated circuit (ASIC) or a field programmable gate array (FPGA).

For facilitating understanding of those skilled in the art, Fig. 6 is shown as an example to describe the system on chip provided in the present application, and referring to Fig. 6, the system on chip may include an interface 20, a data processing apparatus 21, a processor 22, a memory isolation apparatus 23, a memory 24, a second encryption and decryption apparatus 25 (i.e., a common encryption and decryption apparatus configured to process a service without a memory protection expectation) and a first encryption and decryption apparatus 26 (i.e., a trusted encryption and decryption apparatus configured to process a service with a memory protection expectation) connected through a bus. The second encryption and decryption apparatus 25 may include a second DMA module 251 and a second encryption and decryption component 252, the first encryption and decryption apparatus 26 may include a first DMA module 261, a first encryption and decryption component 262 and an OTP memory 263.

The interface 20 is configured to receive encrypted data from external to the system on chip, for example, receive encrypted audio/video streams, store the encrypted data in a common region (i.e., a first region) of the memory, and send processed data to external to the system on chip.

The data processing apparatus 21 is configured to perform data processing, such as encoding and decoding of audio/video streams, or message processing.

The processor 22 is configured to execute a software program of the system on chip, and may support a trusted execution environment (TEE) and a rich execution environment (REE).

The memory isolation apparatus 23 is configured to divide the memory 24 into the common region (i.e., the first region) and an access-restricted region (i.e., a second region and a third region). The common region may be read and written by any access, including a common access and a trusted access. The access-restricted region may only be read and written by a designated and trusted access, and the common access is refused.

The memory 24 is configured to store data in real time during the system on chip running.

The bus is configured to connect each host apparatus and each slave apparatus of the system on chip to perform data and control signal transmission.

The OTP memory 263 stores information such as a key for the second encryption and decryption component or the first encryption and decryption component, and performs storage and management of sensitive information such as a key on internal hardware of the first encryption and decryption apparatus, so as to ensure a relatively high-level security. The OTP memory 263 can only be read and written by the first encryption and decryption component, and the key is only be written into the OTP memory 263 in the trusted execution environment, and cannot be changed after being written. Information such as a key for the first encryption and decryption component is directly read from the OTP memory by the first encryption and decryption component, can only be used in the first encryption and decryption component, and cannot be accessed by software. Information such as a key for the second encryption and decryption component is obtained by reading from the OTP memory by the first encryption and decryption component or is derived from the key read from the OTP memory by the first encryption and decryption component, and then is transmitted to the second encryption and decryption component, can only be used in the second encryption and decryption component, and cannot be accessed by software.

A trusted path of the system on chip in the data processing process includes followings paths.

A path 1 from the interface to the common region of the memory, in the path 1, the interface of the system on chip receives encrypted data, such as encrypted audio/video data, messages and other data, from external to the system on chip and stores the encrypted data in the common region (i.e., the first region) of the memory. All host apparatuses can access the common region. Since the data is encrypted data, it is feasible to store the encrypted data in the common region.

A path 2 from the common region of the memory to the first encryption and decryption apparatus, in the path 2, the first DMA module of the first encryption and decryption apparatus reads the encrypted service data from the common region of the memory, and sends the encrypted service data to the internal first encryption and decryption component for decryption processing, so as to obtain plaintext data. A key used for decryption is read directly from the internal OTP memory, and cannot be accessed by external hardware and software programs. The decryption process is completed inside the first encryption and decryption apparatus, and a security is ensured.

A path 3 from the first encryption and decryption apparatus to an access-restricted region 1 (i.e., the second region) of the memory, in the path 3, the first DMA module writes the plaintext data into the access-restricted region 1 of the memory, the memory isolation apparatus restricts the access-restricted region 1 of the memory to be only written by the first DMA module and read by the data processing apparatus, and other host apparatuses and software programs cannot access the access-restricted region 1. In this way, the path 3 is guaranteed to be dedicated and trusted.

A path 4 from the access-restricted region 1 of the memory to the data processing apparatus, in the path 4, the data processing apparatus reads the plaintext data from the access-restricted region 1 of the memory and performs data processing, such as coding and decoding, message processing and the like. Only the data processing apparatus can read the access-restricted region 1, a security of the plaintext data is ensured.

A path 5 from the data processing apparatus to an access-restricted region 2 (i.e., the third region) of the memory, in the path 5, the data processing apparatus writes processed data into the access-restricted region 2 of the memory, the memory isolation apparatus restricts the access-restricted region 2 of the memory to be only written by the data processing apparatus and read by the first DMA module, and other host apparatuses and software programs cannot access the access-restricted region 2. In this way, the path is guaranteed to be dedicated and trusted.

A path 6 from the access restricted region 2 of the memory to the first encryption and decryption apparatus, in the path 6, the first DMA module of the first encryption and decryption apparatus reads plaintext data from the access-restricted region 2 of the memory, and sends the plaintext data to the internal first encryption and decryption component for encryption processing, so as to obtain encrypted feedback data. A key used for encryption is read directly from the OTP memory and cannot be accessed by external hardware and software programs. The encryption process is completed inside a trusted part, so that a security is ensured.

A path 7 from the first encryption and decryption apparatus to the common region of the memory, in the path 7, the first DMA module writes the encrypted feedback data into the common region of the memory. The data is encrypted data, and thus it is feasible to store the encrypted data in the common region.

A path 8 from the common region of the memory to the interface, in the path 8, the interface reads the encrypted feedback data from the common region of the memory and transmits the encrypted feedback data to a device outside the system on chip.

The present application further provides an electronic device, including the system on chip described above.

The electronic device may be, for example, a set top box with an audio/video processing function, a digital video disc (DVD), a mobile phone, and the like.

In the method for accessing the memory, the system on chip and the electronic device provided in the present application, the interface of the system on chip writes the service data into the first region of the memory, each apparatus following the interface reads data, to be processed, written by a previous apparatus in a region of the memory corresponding to the previous apparatus, processes the data to be processed and writes processed data into a next region of the memory, till the last apparatus following the interface reads data, to be processed, written by a previous apparatus in a region of the memory corresponding to the previous apparatus, processes the data to be processed to obtain feedback data, so that the feedback data is written into the first region, and then the interface transmits the feedback data; the processor serving as the apparatus following the interface only has an access permission for the first region, i.e., is only allowed to access the first region. In the whole data processing process of the system on chip, access permissions for regions of the memory are configured, so that the interface of the system on chip and each apparatus following the interface can only access designated regions of the memory, and cannot randomly access any region in the memory; meanwhile, the processor of the memory, only having access permission for the first region of the memory, cannot access other regions except the first region of the memory, i.e., the interface of the system on chip and the apparatus following the interface have restricted access permissions for the memory, and compared with accessing the memory without any restriction, a security of accessing the memory is improved, and thereby a risk of data leakage is reduced.

The above description is merely a schematic explanation of the present application, rather than limiting the protection scope of the present application.

It should be understood that the term electronic device covers any suitable type of user equipment, such as mobile phones, portable data processing devices, portable web browsers or vehicle-mounted mobile stations.

The present application may be implemented in hardware or dedicated purpose circuits, software, or any combination thereof. For example, some aspects may be implemented in hardware, while other aspects may be implemented in firmware or software which may be executed by a controller, a microprocessor or other computing devices, although the present application is not limited thereto.

The present application may be implemented by a data processor executing computer program instructions, for example, in a processor entity, or by hardware, or by a combination of software and hardware. The computer program instructions may be assembler instructions, instruction set architecture (ISA) instructions, machine instructions, machine-related instructions, microcode, firmware instructions, state setting data, or source or object codes written in any combination of one or more programming languages.

The block diagram of any logical flowchart in the accompanying drawings of the present application may represent program operations; or represent interconnected logic circuits, modules, and functions; or represent a combination of program operations and logic circuits, modules and functions. The computer program may be stored in a storage device. The storage device may be of any type suitable for the local technical environment and may be implemented by using any suitable data storage technology, includes, but is not limited to, a Random Access Memory (RAM), a Read-Only Memory (ROM), an optical storage device and system (a digital video disc (DVD) or a compact disc(CD)) and the like. The computer-readable medium may include a non-transitory storage medium. The data processor may be of any type suitable for the local technical environment, includes, but is not limited to, a general computer, a specific computer, a microprocessor, a digital signal processor (DSP), an application specific integrated circuit (ASIC), a field programmable gate array (FPGA), and a processor based on a multi-core processor architecture.

The above description provides a detailed description of exemplary embodiments of the present application, which are examples but not limited. In conjunction with the accompanying drawings and claims, various modifications and adjustments for the above examples are apparent for those skilled in the art without departing from scope of the present application. The scope of the present application is determined by the claims.

## Claims

1. A method for accessing a memory, applied to a system on chip, comprising:
writing, by an interface of the system on chip, service data into a first region of the memory (S101);
reading, by each apparatus following the interface, data, to be processed, written by a previous apparatus in a region of the memory corresponding to the previous apparatus, processing the data to be processed and writing processed data into a next region of the memory, till reading, by a last apparatus following the interface, data, to be processed, written by a previous apparatus in a region of the memory corresponding to the previous apparatus, processing the data to be processed to obtain feedback data, so that the feedback data is written into the first region (S102); and
transmitting, by the interface, the feedback data (S103),
wherein a processor serving as the apparatus following the interface only has an access permission for the first region,
wherein the reading, by each apparatus following the interface, data, to be processed, written by a previous apparatus in a region of the memory corresponding to the previous apparatus, processing the data to be processed and writing processed data into a next region of the memory, till reading, by a last apparatus following the interface, data, to be processed, written by a previous apparatus in a region of the memory corresponding to the previous apparatus, processing the data to be processed to obtain feedback data, so that the feedback data is written into the first region (S102) comprises:
writing, by a first encryption and decryption apparatus, first data obtained by decrypting the service data in the first region into a second region of the memory;
writing, by a data processing apparatus, second data obtained by processing the first data into a third region of the memory; and
writing, by the first encryption and decryption apparatus, the feedback data obtained by encrypting the second data into the first region of the memory,
wherein the first region supports to be accessed by all host apparatuses of the system on chip, the second region only supports a write operation performed by the first encryption and decryption apparatus and a read operation performed by the data processing apparatus, the third region supports only a write operation performed by the data processing apparatus and a read operation performed by the first encryption and decryption apparatus.

2. The method according to claim 1, further comprising:
before writing, by the interface of the system on chip, service data into the first region of the memory, configuring, by the processor, access permissions for the first region, the second region and the third region in a trusted execution environment.

3. The method according to claim 1, wherein the first encryption and decryption apparatus stores a key for decryption or encryption.

4. The method according to any one of claims 1 to 3, wherein the reading, by each apparatus following the interface, data, to be processed, written by a previous apparatus in a region of the memory corresponding to the previous apparatus, processing the data to be processed and writing processed data into a next region of the memory comprises:
reading, by the apparatus following the interface, data, to be processed, written by a previous apparatus in a region of the memory corresponding to the previous apparatus, and processing the data to be processed to obtain the processed data (S201);
receiving, by a memory isolation apparatus, an access request sent by the apparatus following the interface, with the access request comprising an identity of the apparatus following the interface and a current access type (S202); and
after determining the apparatus following the interface having a write permission for the next region of the memory according to the identity, the current access type and a access mapping relationship currently stored in the memory isolation apparatus, allowing, by the memory isolation apparatus, the apparatus following the interface to write the processed data into the next region, wherein the access mapping relationship comprises a corresponding relationship between different regions of the memory and identities of apparatuses having access permissions for the regions, and a corresponding relationship between different regions of the memory and access types of apparatuses having access permissions for the regions (S203).

5. The method according to claim 4, further comprising:
during the system on chip being initialized, configuring, by the processor, the access mapping relationship into the memory isolation apparatus in the trusted execution environment.

6. The method according to claim 3, wherein a service to which the service data belongs comprises a service with a memory protection or a service without a memory protection, in response to that the service to which the service data belongs is the service without the memory protection, the method further comprising:
acquiring, by a second encryption and decryption apparatus, the key from the first encryption and decryption apparatus, and writing third data obtained by decrypting the service data using the key into the first region of the memory.

7. A system on chip, comprising an interface (10), apparatuses (11) following the interface and a memory (12) connected through a bus;
the interface (10) is configured to write service data into a first region of the memory (12);
each apparatus (11) following the interface (10) is configured to read data, to be processed, written by a previous apparatus in a region of the memory (12) corresponding to the previous apparatus, process the data to be processed and write processed data into a next region of the memory (12), till a last apparatus (11) following the interface (10) reads data, to be processed, written by a previous apparatus in a region of the memory (12) corresponding to the previous apparatus, processes the data to be processed to obtain feedback data, so that the feedback data is written into the first region; and
the interface (10) is further configured to transmit the feedback data,
wherein a processor (13) serving as the apparatus (11) following the interface (10) only has an access permission for the first region,
wherein the apparatuses (11) following the interface (10) comprise a first encryption and decryption apparatus (14) and a data processing apparatus (15);
the first encryption and decryption apparatus (14) is configured to write first data obtained by decrypting the service data in the first region into a second region of the memory (12);
the data processing apparatus (15) is configured to write second data obtained by processing the first data into a third region of the memory (12); and
the first encryption and decryption apparatus (14) is configured to write the feedback data obtained by encrypting the second data into the first region of the memory (12),
wherein the first region supports to be accessed by all host apparatuses of the system on chip, the second region only supports a write operation performed by the first encryption and decryption apparatus (14) and a read operation performed by the data processing apparatus (15), the third region supports only a write operation performed by the data processing apparatus (15) and a read operation performed by the first encryption and decryption apparatus (14).

8. The system on chip according to claim 7, wherein the first encryption and decryption apparatus (14) stores a key for decryption or encryption.

9. The system on chip according to claim 7 or 8, further comprising a memory isolation apparatus (16) connected through the bus;
each apparatus (11) following the interface (10) is configured to read data, to be processed, written by a previous apparatus in a region of the memory (12) corresponding to the previous apparatus, and process the data to be processed to obtain the processed data;
the memory isolation apparatus (16) is configured to receive an access request sent by the apparatus (11) following the interface (10), the access request comprises an identity of the apparatus (11) following the interface (10) and a current access type; and
after determining the apparatus (11) following the interface (10) having a write permission for the next region of the memory (12) according to the identity, the current access type and a access mapping relationship currently stored in the memory isolation apparatus (16), the memory isolation apparatus (16) is configured to allow the apparatus (11) following the interface (10) to write the processed data into the next region, wherein the access mapping relationship comprises a corresponding relationship between different regions of the memory and identities of apparatuses having access permissions for the regions, and a corresponding relationship between different regions of the memory (12) and access types of apparatuses having access permissions for the regions.

10. The system on chip according to claim 8, further comprising: a second encryption and decryption apparatus (17) connected through the bus; a service to which the service data belongs comprises a service with a memory protection or a service without a memory protection.
in response to that a service to which the service data belongs is the service without the memory protection, the second encryption and decryption apparatus (17) is configured to acquire the key from the first encryption and decryption apparatus (14), and write third data obtained by decrypting the service data using the key into the first region of the memory (12).

11. The system on chip according to claim 10, wherein each of the first encryption and decryption apparatus (14), the data processing apparatus (15), and the second encryption and decryption apparatus (17) is provided with a direct memory access module therein.

12. An electronic device, comprising the system on chip according to any of claims 7 to 11.

## Patentansprüche

1. Verfahren zum Zugreifen auf einen Speicher, angewendet auf ein System-on-Chip, umfassend: Schreiben, durch eine Schnittstelle des System-on-Chips, von Servicedaten in einen ersten Bereich des Speichers (S101);
Lesen, durch jede Vorrichtung, die der Schnittstelle folgt, von zu verarbeitenden Daten, die durch eine vorherige Vorrichtung in einen Bereich des Speichers geschrieben wurden, der der vorherigen Vorrichtung entspricht, Verarbeiten der zu verarbeitenden Daten und Schreiben von verarbeiteten Daten in einen nächsten Bereich des Speichers, bis zum Lesen, durch eine letzte Vorrichtung, die der Schnittstelle folgt, von zu verarbeitenden Daten, die durch eine vorherige Vorrichtung in einen Bereich des Speichers geschrieben wurden, der der vorherigen Vorrichtung entspricht, Verarbeiten der zu verarbeitenden Daten, um Rückmeldungsdaten zu erhalten, so dass die Rückmeldungsdaten in den ersten Bereich geschrieben werden (S102); und
Übertragen, durch die Schnittstelle, der Rückmeldungsdaten (S103), wobei ein Prozessor, der als die Vorrichtung dient, die der Schnittstelle folgt, nur eine Zugriffserlaubnis für den ersten Bereich hat,
wobei das Lesen, durch jede Vorrichtung, die der Schnittstelle folgt, von zu verarbeitenden Daten, die durch eine vorherige Vorrichtung in einen Bereich des Speichers geschrieben wurden, der der vorherigen Vorrichtung entspricht, Verarbeiten der zu verarbeitenden Daten und Schreiben von verarbeiteten Daten in einen nächsten Bereich des Speichers, bis zum Lesen, durch eine letzte Vorrichtung, die der Schnittstelle folgt, von zu verarbeitenden Daten, die durch eine vorherige Vorrichtung in einen Bereich des Speichers geschrieben wurden, der der vorherigen Vorrichtung entspricht, Verarbeiten der zu verarbeitenden Daten, um Rückmeldungsdaten zu erhalten, so dass die Rückmeldungsdaten in den ersten Bereich geschrieben werden (S102), umfasst:
Schreiben, durch eine erste Verschlüsselungs- und Entschlüsselungsvorrichtung, von ersten Daten, die durch Entschlüsseln der Servicedaten in dem ersten Bereich erhalten wurden, in einen zweiten Bereich des Speichers;
Schreiben, durch eine Datenverarbeitungsvorrichtung, von zweiten Daten, die durch Verarbeiten der ersten Daten erhalten wurden, in einen dritten Bereich des Speichers; und
Schreiben, durch die erste Verschlüsselungs- und Entschlüsselungsvorrichtung, der Rückmeldungsdaten, die durch Verschlüsseln der zweiten Daten erhalten wurden, in den ersten Bereich des Speichers,
wobei der erste Bereich das Zugreifen durch alle Host-Vorrichtungen des System-on-Chips unterstützt, der zweite Bereich nur eine Schreiboperation, die durch die erste Verschlüsselungs- und Entschlüsselungsvorrichtung durchgeführt wird, und eine Leseoperation, die durch die Datenverarbeitungsvorrichtung durchgeführt wird, unterstützt, der dritte Bereich nur eine Schreiboperation, die durch die Datenverarbeitungsvorrichtung durchgeführt wird, und eine Leseoperation, die durch die erste Verschlüsselungs- und Entschlüsselungsvorrichtung durchgeführt wird, unterstützt.

2. Verfahren nach Anspruch 1, ferner umfassend:
vor dem Schreiben, durch die Schnittstelle des System-on-Chips, von Servicedaten in den ersten Bereich des Speichers, Konfigurieren, durch den Prozessor, von Zugriffserlaubnis für den ersten Bereich, den zweiten Bereich und den dritten Bereich in einer vertrauenswürdigen Ausführungsumgebung.

3. Verfahren nach Anspruch 1, wobei die erste Verschlüsselungs-und Entschlüsselungsvorrichtung einen Schlüssel zur Entschlüsselung oder Verschlüsselung speichert.

4. Verfahren nach einem der Ansprüche 1 bis 3, wobei das Lesen, durch jede Vorrichtung, die der Schnittstelle folgt, von zu verarbeitenden Daten, die durch eine vorherige Vorrichtung in einen Bereich des Speichers geschrieben wurden, der der vorherigen Vorrichtung entspricht, Verarbeiten der zu verarbeitenden Daten und Schreiben von verarbeiteten Daten in einen nächsten Bereich des Speichers umfasst:
Lesen, durch die Vorrichtung, die der Schnittstelle folgt, von zu verarbeitenden Daten, die durch eine vorherige Vorrichtung in einen Bereich des Speichers geschrieben wurden, der der vorherigen Vorrichtung entspricht, und Verarbeiten der zu verarbeitenden Daten, um die verarbeiteten Daten zu erhalten (S201);
Empfangen, durch eine Speicherisolationsvorrichtung, einer Zugriffsanforderung, die durch die Vorrichtung gesendet wurde, die der Schnittstelle folgt, wobei die Zugriffsanforderung eine Identität der Vorrichtung, die der Schnittstelle folgt, und einen aktuellen Zugriffstyp umfasst (S202); und
nach dem Bestimmen, dass die Vorrichtung, die der Schnittstelle folgt, eine Schreiberlaubnis für den nächsten Bereich des Speichers gemäß der Identität, dem aktuellen Zugriffstyp und einer Zugriffsabbildungsbeziehung hat, die aktuell in der Speicherisolationsvorrichtung gespeichert ist, Erlauben, durch die Speicherisolationsvorrichtung, dass die Vorrichtung, die der Schnittstelle folgt, die verarbeiteten Daten in den nächsten Bereich schreibt, wobei die Zugriffsabbildungsbeziehung eine entsprechende Beziehung zwischen verschiedenen Bereichen des Speichers und Identitäten von Vorrichtungen, die Zugriffserlaubnis für die Bereiche haben, und eine entsprechende Beziehung zwischen verschiedenen Bereichen des Speichers und Zugriffstypen von Vorrichtungen, die Zugriffserlaubnis für die Bereiche haben, umfasst (S203).

5. Verfahren nach Anspruch 4, ferner umfassend:
während das System-on-Chip initialisiert wird, Konfigurieren, durch den Prozessor, der Zugriffsabbildungsbeziehung in die Speicherisolationsvorrichtung in der vertrauenswürdigen Ausführungsumgebung.

6. Verfahren nach Anspruch 3, wobei ein Service, zu dem die Servicedaten gehören, einen Service mit einem Speicherschutz oder einen Service ohne einen Speicherschutz umfasst, als Reaktion darauf, dass der Service, zu dem die Servicedaten gehören, der Service ohne den Speicherschutz ist, wobei das Verfahren ferner umfasst:
Erfassen, durch eine zweite Verschlüsselungs- und Entschlüsselungsvorrichtung, des Schlüssels von der ersten Verschlüsselungs- und Entschlüsselungsvorrichtung, und Schreiben von dritten Daten, die durch Entschlüsseln der Servicedaten unter Verwenden des Schlüssels erhalten wurden, in den ersten Bereich des Speichers.

7. System-on-Chip, umfassend eine Schnittstelle (10), Vorrichtungen (11), die der Schnittstelle folgen, und einen Speicher (12), der durch einen Bus verbunden ist;
wobei die Schnittstelle (10) konfiguriert ist, um Servicedaten in einen ersten Bereich des Speichers (12) zu schreiben;
wobei jede Vorrichtung (11), die der Schnittstelle (10) folgt, konfiguriert ist, um zu verarbeitende Daten zu lesen, die durch eine vorherige Vorrichtung in einen Bereich des Speichers (12) geschrieben wurden, der der vorherigen Vorrichtung entspricht, die zu verarbeitenden Daten zu verarbeiten und verarbeitete Daten in einen nächsten Bereich des Speichers (12) zu schreiben, bis eine letzte Vorrichtung (11), die der Schnittstelle (10) folgt, zu verarbeitende Daten liest, die durch eine vorherige Vorrichtung in einen Bereich des Speichers (12) geschrieben wurden, der der vorherigen Vorrichtung entspricht, die zu verarbeitenden Daten verarbeitet, um Rückmeldungsdaten zu erhalten, so dass die Rückmeldungsdaten in den ersten Bereich geschrieben werden; und
wobei die Schnittstelle (10) ferner konfiguriert ist, um die Rückmeldungsdaten zu übertragen,
wobei ein Prozessor (13), der als die Vorrichtung (11) dient, die der Schnittstelle (10) folgt, nur eine Zugriffserlaubnis für den ersten Bereich hat, wobei die Vorrichtungen (11), die der Schnittstelle (10) folgen, eine erste Verschlüsselungs- und Entschlüsselungsvorrichtung (14) und eine Datenverarbeitungsvorrichtung (15) umfassen;
wobei die erste Verschlüsselungs- und Entschlüsselungsvorrichtung (14) konfiguriert ist, um erste Daten, die durch Entschlüsseln der Servicedaten in dem ersten Bereich erhalten wurden, in einen zweiten Bereich des Speichers (12) zu schreiben;
wobei die Datenverarbeitungsvorrichtung (15) konfiguriert ist, um zweite Daten, die durch Verarbeiten der ersten Daten erhalten wurden, in einen dritten Bereich des Speichers (12) zu schreiben; und
wobei die erste Verschlüsselungs- und Entschlüsselungsvorrichtung (14) konfiguriert ist, um die Rückmeldungsdaten, die durch Verschlüsseln der zweiten Daten erhalten wurden, in den ersten Bereich des Speichers (12) zu schreiben,
wobei der erste Bereich das Zugreifen durch alle Host-Vorrichtungen des System-on-Chips unterstützt, der zweite Bereich nur eine Schreiboperation, die durch die erste Verschlüsselungs- und Entschlüsselungsvorrichtung (14) durchgeführt wird, und eine Leseoperation, die durch die Datenverarbeitungsvorrichtung (15) durchgeführt wird, unterstützt, der dritte Bereich nur eine Schreiboperation, die durch die Datenverarbeitungsvorrichtung (15) durchgeführt wird, und eine Leseoperation, die durch die erste Verschlüsselungs- und Entschlüsselungsvorrichtung (14) durchgeführt wird, unterstützt.

8. System-on-Chip nach Anspruch 7, wobei die erste Verschlüsselungs- und Entschlüsselungsvorrichtung (14) einen Schlüssel zur Entschlüsselung oder Verschlüsselung speichert.

9. System-on-Chip nach Anspruch 7 oder 8, ferner umfassend eine Speicherisolationsvorrichtung (16), die durch den Bus verbunden ist;
wobei jede Vorrichtung (11), die der Schnittstelle (10) folgt, konfiguriert ist, um zu verarbeitende Daten zu lesen, die durch eine vorherige Vorrichtung in einen Bereich des Speichers (12) geschrieben wurden, der der vorherigen Vorrichtung entspricht, und die zu verarbeitenden Daten zu verarbeiten, um die verarbeiteten Daten zu erhalten;
wobei die Speicherisolationsvorrichtung (16) konfiguriert ist, um eine Zugriffsanforderung zu empfangen, die durch die Vorrichtung (11) gesendet wurde, die der Schnittstelle (10) folgt, wobei die Zugriffsanforderung eine Identität der Vorrichtung (11), die der Schnittstelle (10) folgt, und einen aktuellen Zugriffstyp umfasst; und
nach dem Bestimmen, dass die Vorrichtung (11), die der Schnittstelle (10) folgt, eine Schreiberlaubnis für den nächsten Bereich des Speichers (12) gemäß der Identität, dem aktuellen Zugriffstyp und einer Zugriffsabbildungsbeziehung hat, die aktuell in der Speicherisolationsvorrichtung (16) gespeichert ist, wobei die Speicherisolationsvorrichtung (16) konfiguriert ist, um der Vorrichtung (11), die der Schnittstelle (10) folgt, zu erlauben, die verarbeiteten Daten in den nächsten Bereich zu schreiben, wobei die Zugriffsabbildungsbeziehung eine entsprechende Beziehung zwischen verschiedenen Bereichen des Speichers und Identitäten von Vorrichtungen, die Zugriffserlaubnis für die Bereiche haben, und eine entsprechende Beziehung zwischen verschiedenen Bereichen des Speichers (12) und Zugriffstypen von Vorrichtungen, die Zugriffserlaubnis für die Bereiche haben, umfasst.

10. System-on-Chip nach Anspruch 8, ferner umfassend: eine zweite Verschlüsselungs- und Entschlüsselungsvorrichtung (17), die durch den Bus verbunden ist;
wobei als Reaktion darauf, dass ein Service, zu dem die Servicedaten gehören, der Service ohne den Speicherschutz ist, die zweite Verschlüsselungs- und Entschlüsselungsvorrichtung (17) konfiguriert ist, um den Schlüssel von der ersten Verschlüsselungs- und Entschlüsselungsvorrichtung (14) zu erfassen, und dritte Daten, die durch Entschlüsseln der Servicedaten unter Verwenden des Schlüssels erhalten wurden, in den ersten Bereich des Speichers (12) zu schreiben.

11. System-on-Chip nach Anspruch 10, wobei jede der ersten Verschlüsselungs- und Entschlüsselungsvorrichtung (14), der Datenverarbeitungsvorrichtung (15) und der zweiten Verschlüsselungs- und Entschlüsselungsvorrichtung (17) mit einem Direktspeicherzugriffsmodul darin bereitgestellt ist.

12. Elektronisches Gerät, umfassend das System-on-Chip nach einem der Ansprüche 7 bis 11.

## Revendications

1. Procédé pour accéder à une mémoire, appliqué à un système sur puce, comprenant : écrire, par une interface du système sur puce, des données de service dans une première région de la mémoire (S101) ;
lire, par chaque appareil suivant l'interface, des données, à traiter, écrites par un appareil précédent dans une région de la mémoire correspondant à l'appareil précédent, traiter les données à traiter et écrire des données traitées dans une région suivante de la mémoire, jusqu'à lire, par un dernier appareil suivant l'interface, des données, à traiter, écrites par un appareil précédent dans une région de la mémoire correspondant à l'appareil précédent, traiter les données à traiter pour obtenir des données de rétroaction, de sorte que les données de rétroaction soient écrites dans la première région (S102) ; et
envoyer, par l'interface, les données de rétroaction (S103),
dans lequel un processeur servant d'appareil suivant l'interface a seulement une permission d'accès pour la première région,
dans lequel lire, par chaque appareil suivant l'interface, de données, à traiter, écrites par un appareil précédent dans une région de la mémoire correspondant à l'appareil précédent, traiter les données à traiter et écrire des données traitées dans une région suivante de la mémoire, jusqu'à lire, par un dernier appareil suivant l'interface, des données, à traiter, écrites par un appareil précédent dans une région de la mémoire correspondant à l'appareil précédent, traiter les données à traiter pour obtenir des données de rétroaction, de sorte que les données de rétroaction soient écrites dans la première région (S102) comprend :
écrire, par un premier appareil de cryptage et de décryptage, des premières données obtenues en décryptant les données de service dans la première région dans une deuxième région de la mémoire ;
écrire, par un appareil de traitement de données, des deuxièmes données obtenues en traitant les premières données dans une troisième région de la mémoire ; et
écrire, par le premier appareil de cryptage et de décryptage, les données de rétroaction obtenues en cryptant les deuxièmes données dans la première région de la mémoire,
dans lequel la première région prend en charge l'accès par tous les appareils hôtes du système sur puce, la deuxième région prend uniquement en charge une opération d'écriture réalisée par le premier appareil de cryptage et de décryptage et une opération de lecture réalisée par l'appareil de traitement de données, la troisième région prend uniquement en charge une opération d'écriture réalisée par l'appareil de traitement de données et une opération de lecture réalisée par le premier appareil de cryptage et de décryptage.

2. Procédé selon la revendication 1, comprenant en outre :
avant d'écrire, par l'interface du système sur puce, des données de service dans la première région de la mémoire, configurer, par le processeur, des permissions d'accès pour la première région, la deuxième région et la troisième région dans un environnement d'exécution de confiance.

3. Procédé selon la revendication 1, dans lequel le premier appareil de cryptage et de décryptage stocke une clé pour le décryptage ou le cryptage.

4. Procédé selon l'une quelconque des revendications 1 à 3, dans lequel lire, par chaque appareil suivant l'interface, des données, à traiter, écrites par un appareil précédent dans une région de la mémoire correspondant à l'appareil précédent, traiter les données à traiter et écrire des données traitées dans une région suivante de la mémoire comprend :
lire, par l'appareil suivant l'interface, des données, à traiter, écrites par un appareil précédent dans une région de la mémoire correspondant à l'appareil précédent, et traiter les données à traiter pour obtenir les données traitées (S201) ;
recevoir, par un appareil d'isolement de mémoire, une demande d'accès envoyée par l'appareil suivant l'interface, la demande d'accès comprenant une identité de l'appareil suivant l'interface et un type d'accès actuel (S202) ; et
après avoir déterminé que l'appareil suivant l'interface a une permission d'écriture pour la région suivante de la mémoire en fonction de l'identité, du type d'accès actuel et d'une relation de mappage d'accès actuellement stockée dans l'appareil d'isolation de mémoire, permettre, par l'appareil d'isolation de mémoire, à l'appareil suivant l'interface d'écrire les données traitées dans la région suivante, dans lequel la relation de mappage d'accès comprend une relation correspondante entre différentes régions de la mémoire et des identités d'appareils ayant des permissions d'accès pour les régions, et une relation correspondante entre différentes régions de la mémoire et des types d'accès d'appareils ayant des permissions d'accès pour les régions (S203).

5. Procédé selon la revendication 4, comprenant en outre :
pendant que le système sur puce est initialisé, configurer, par le processeur, la relation de mappage d'accès dans l'appareil d'isolation de mémoire dans l'environnement d'exécution de confiance.

6. Procédé selon la revendication 3, dans lequel un service auquel les données de service appartient comprend un service avec une protection de mémoire ou un service sans une protection de mémoire, en réponse au fait que le service auquel les données de service appartient est le service sans la protection de mémoire, le procédé comprenant en outre :
acquérir, par un deuxième appareil de cryptage et de décryptage, la clé à partir du premier appareil de cryptage et de décryptage, et écrire des troisièmes données obtenues en décryptant les données de service en utilisant la clé dans la première région de la mémoire.

7. Système sur puce, comprenant une interface (10), des appareils (11) suivant l'interface et une mémoire (12) connectée par l'intermédiaire d'un bus ;
l'interface (10) est configurée pour écrire des données de service dans une première région de la mémoire (12) ;
chaque appareil (11) suivant l'interface (10) est configuré pour lire des données, à traiter, écrites par un appareil précédent dans une région de la mémoire (12) correspondant à l'appareil précédent, traiter les données à traiter et écrire des données traitées dans une région suivante de la mémoire (12), jusqu'à ce qu'un dernier appareil (11) suivant l'interface (10) lise des données, à traiter, écrites par un appareil précédent dans une région de la mémoire (12) correspondant à l'appareil précédent, traite les données à traiter pour obtenir des données de rétroaction, de sorte que les données de rétroaction soient écrites dans la première région ; et
l'interface (10) est en outre configurée pour envoyer les données de rétroaction,
dans lequel un processeur (13) servant d'appareil (11) suivant l'interface (10) a seulement une permission d'accès pour la première région, dans lequel les appareils (11) suivant l'interface (10) comprennent un premier appareil de cryptage et de décryptage (14) et un appareil de traitement de données (15) ;
le premier appareil de cryptage et de décryptage (14) est configuré pour écrire des premières données obtenues en décryptant les données de service dans la première région dans une deuxième région de la mémoire (12) ;
l'appareil de traitement de données (15) est configuré pour écrire des deuxièmes données obtenues en traitant les premières données dans une troisième région de la mémoire (12) ; et
le premier appareil de cryptage et de décryptage (14) est configuré pour écrire les données de rétroaction obtenues en cryptant les deuxièmes données dans la première région de la mémoire (12),
dans lequel la première région prend en charge l'accès par tous les appareils hôtes du système sur puce, la deuxième région prend uniquement en charge une opération d'écriture réalisée par le premier appareil de cryptage et de décryptage (14) et une opération de lecture réalisée par l'appareil de traitement de données (15), la troisième région prend uniquement en charge une opération d'écriture réalisée par l'appareil de traitement de données (15) et une opération de lecture réalisée par le premier appareil de cryptage et de décryptage (14).

8. Système sur puce selon la revendication 7, dans lequel le premier appareil de cryptage et de décryptage (14) stocke une clé pour le décryptage ou le cryptage.

9. Système sur puce selon la revendication 7 ou 8, comprenant en outre un appareil d'isolation de mémoire (16) connecté par l'intermédiaire du bus ;
chaque appareil (11) suivant l'interface (10) est configuré pour lire des données, à traiter, écrites par un appareil précédent dans une région de la mémoire (12) correspondant à l'appareil précédent, et traiter les données à traiter pour obtenir les données traitées ;
l'appareil d'isolation de mémoire (16) est configuré pour recevoir une demande d'accès envoyée par l'appareil (11) suivant l'interface (10), la demande d'accès comprend une identité de l'appareil (11) suivant l'interface (10) et un type d'accès actuel ; et
après avoir déterminé que l'appareil (11) suivant l'interface (10) a une permission d'écriture pour la région suivante de la mémoire (12) en fonction de l'identité, du type d'accès actuel et d'une relation de mappage d'accès actuellement stockée dans l'appareil d'isolation de mémoire (16), l'appareil d'isolation de mémoire (16) est configuré pour permettre à l'appareil (11) suivant l'interface (10) d'écrire les données traitées dans la région suivante, dans lequel la relation de mappage d'accès comprend une relation correspondante entre différentes régions de la mémoire et des identités d'appareils ayant des permissions d'accès pour les régions, et une relation correspondante entre différentes régions de la mémoire (12) et des types d'accès d'appareils ayant des permissions d'accès pour les régions.

10. Système sur puce selon la revendication 8, comprenant en outre : un deuxième appareil de cryptage et de décryptage (17) connecté par l'intermédiaire du bus ;
un service auquel les données de service appartient comprend un service avec une protection de mémoire ou un service sans une protection de mémoire ;
en réponse au fait qu'un service auquel les données de service appartient est le service sans la protection de mémoire, le deuxième appareil de cryptage et de décryptage (17) est configuré pour acquérir la clé à partir du premier appareil de cryptage et de décryptage (14), et écrire des troisièmes données obtenues en décryptant les données de service en utilisant la clé dans la première région de la mémoire (12).

11. Système sur puce selon la revendication 10, dans lequel chacun du premier appareil de cryptage et de décryptage (14), de l'appareil de traitement de données (15) et du deuxième appareil de cryptage et de décryptage (17) est pourvu d'un module d'accès direct à la mémoire dans celui-ci.

12. Dispositif électronique, comprenant le système sur puce selon l'une quelconque des revendications 7 à 11.
